# EUROPEAN PATENT APPLICATION

(11) **EP 2 267 613 A1**
(43) Date of publication of application: **29.12.2010**
(21) Application number: 09425249.1
(22) Date of filing: 26.06.2009
(51) Int. Cl.: G06F 17/24, G06F 17/22

(54) **Logical entities data management with web user association**

(71) Applicant: OneCube S.r.l., 27100 Pavia (IT)
(72) Inventor: Albertini, Michele, 20067 Paullo (MI) (IT)

(57) **Abstract**

The innovation consists in a system to manage data collection from an identified user, operating on a client, to a server web. Filling data trasmitting from client to server are organized into a logical entities structure. It allows to identify univocally specific user, specific form, specific field and its value. The process works both with registered web users and anonymous users. Thanks to this innovation any partial form filling is saved and become available in the following session.

## Description

### Application field:

The application field of the present invention concerns those kind of application for which a user is connected to a server web to fill a form with personal data. As this kind of data are private data, usually there is a session time to fill out the form, this is in order to ensure safety.

### Stata of the art

One of the common way to collect data of web user, is tipically the system for which a client is connected to a web server by an identification process (for example a login process). At this point usually the user on the client side must fill out a form with his own data, in order to transmit the data themselves to the web server. The process can involve different kinds of data according to web application. It is the case of on line subscriptions or particulary on line applications as tickets booking and "home banking". Tipically data are characterized by the fact that they are personal or private data (for example data concerning a web wire transfer).

To ensure safety is commonly used a particular solution: a time limited work session. This is to avoid that filling data on the screen could be seen by other peple if the user move away; and also to avoid that other people could operate on client taking advantage of user absence. The problem is that if the user wastes time during the filling of the form (for example he answers the phone), the session expires and he must fill again the whole form. Infact, data filled before the final submit are not recorded by the system. So we can say that often to ensure safety, by a time limited session, creates an inconvenience for the user. To increase session time duration is not an optimal solution because it means to affect safety instances. By now there is not an optimal solution for this problem, as the matter of fact there are systems to save data that concern text editor which are related to different application field.

The innovation of the present system is characterized by the fact that all the data filled before session time expires, are saved by the system itself and the user can find in the new session pre-loaded data. The system can works even in the absence of a login process, it is the case of anonymous user. Infact anonymous user can be identified with different devices, for example by transmitting cookies to client pc.

### Brief description

It is a system to manage more efficiently web data collection in which a user, operating on client, transmit to a web server. In these cases commonly the user has to fill a form. Thanks to this innovation if the session time expires before the submitting, all the fields the user has already filled are saved by the system. The result is that user has not to fill the form from the beginning in the following session.

The Innovation is related to techonologies which are implemented to save field data of a specific form by a specific record strucuture. The process begin when the user enters the site (user operates on a client). The following step is user identification, it can be the case of a login process for registered users or can be the case of the request of trasmission of a cookie for anonymous users. Consequently user is univocally identified by the client an by the server and two cases are possible:
- identified user enters a specific form for the first time. In this case the form data structure which user can see on client is replicated on the server. Obviously the form data structure will be a blank data structure (as we said user enters for the first time that specific form), it means that no field of the form is filled. Consequently there is only one data-flow: from the client to the server, this data-flow involves data user transmits when he starts to fill the form.
- Identified user has already entered the form and filled it. Also In this case the form data structure which user can see on client is replicated on the server. But it will not be a blank form, infact, the fields user has already filled will be pre-compiled fields. It means there are two flows of data, the first involves registered data of previous filling, from server to client, the second involves data of current filling, from client to server.

### Brief description of drawings

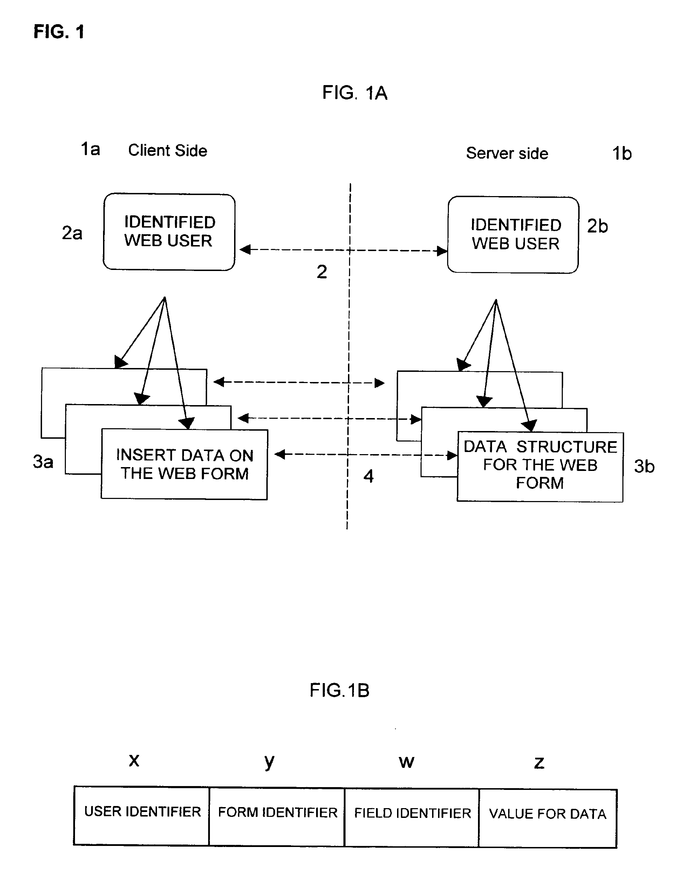

In fig. 1 is represented the logic data flow which takes place between client and server (fig. 1A) and the logical entities data structure to register data (fig. 1B).

### Detailed description

As we said Fig.1A represents the logic data flow between client and server (and viceversa). Fig. 1A is divided into two sections by a dashed line, the section on the left represents client side operations, fig 1A(1a); the section on the right represents server side operations, fig. 1A(1b).

The process starts with user identification on both client side 1A(2a) and server side 1A(2b). Univocal identification is represented by data flow 1A(2). Then user enters a specific form on client side 1A(3a), consequently on server side is replicated that specific form structure 1A(3b). This structure will be a blank structure if the user enters the form for the first time, on the contrary (if user has already filled the form), it will be a form in which some fields have pre-loaded data. Fig. 1A(4) represents the second data flow between client and server, if the user enters the form for the first time it represents only data flow from client to server originated from the fact that user is filling the form. If the user has already entered and filled the form there will be a second data flow, from server to client to transmit pre-loaded data. Pre-loaded data are data user has filled the form with in a previous session.

In order to ensure that partial fillings are correctly saved and correctly pre-loaded, the present invention involves a tecnique to manage data. The following logic strucure for registering data represents an embodiment of the invention:
- User identifier field fig 1 B(x): it's a datum that allows to identify univocally a user. It will be a code to recognise registered users (who enters the site by a login) or a cookie for anonymous user (users who are not registered).
- Form identifier fig. 1 B(y): it's a datum which allows to identify a specific form, Consequently the system recognise that a specific user has entered a specific form, if the user has previously entered that specific form, saved data must be loaded, if user fills new data, these ones must be saved, if user substitutes the old data with new data, old data must be deleted and new data must be saved.
- Field identifier 1 B(w): it's a datum which allows to identify specific fields within a specific form.
- Value for data field fig. 1 B(z): it' necessary to connect a specific value to a specific field of a specific form. Together with the three fields above it provides a univocal key for a specific value.

## Claims

1. A data management process on server side to register web user inputs related to web form filling **characterized in that** it's possible to identify univocally a specific field of a specific form of a specific web user in order to ensure that form fields previously filled in a previous session, will be pre-loaded in the following session. Data structure for registering data is based on three key fields plus one field for data value: user identifier (x), form identifier (y), field identifier (w) and value for data (z).

2. A data management process on server side to register web user inputs related to web form filling as claimed in claim 1, **characterized in that** data structure for registering data is based on three or more key fields plus one or more fields for data value.

3. A data management process on server side to register web user inputs related to web form filling, **characterized in that** data structure presents the same main features of any previous claims, and fields values are trasmitting from client to server one at a time or all together.
